# EUROPEAN PATENT SPECIFICATION

(11) **EP 3 773 967 B1**
(45) Date of publication and mention of the grant of the patent: **27.11.2024**
(21) Application number: 19719991.2
(22) Date of filing: 27.03.2019
(51) Int. Cl.: B01D 15/16, B32B 25/04, B32B 25/20, B32B 27/28, G01N 30/02, G01N 30/30, B32B 27/08, B32B 27/36

(54) **THERMAL PAD AND COLUMN STABILIZER ASSEMBLY**
WÄRMEKISSEN UND SÄULENSTABILISATORANORDNUNG
TAMPON THERMIQUE ET ENSEMBLE STABILISATEUR DE COLONNE

(30) Priority: 29.03.2018 US 201862650126 P
(43) Date of publication of application: 17.02.2021
(73) Proprietor: Waters Technologies Corporation, Milford, MA 01757-3696 (US)
(72) Inventor: MOELLER, Mark, W., Norton, MA 02766 (US); SHANG, Zongren, Westborough, MA 01581 (US); DENECKE, Edwin, H., Attleboro, MA 02760 (US); MACKINNON, Roy, J., Shrewsbury, MA 0260 (US)
(74) Representative: Forresters IP LLP
(86) International application number: PCT/US2019/024228
(87) International publication number: WO 2019/191192

(56) References cited:
- US-A1- 2009 211 978
- US-A1- 2015 260 694
- US-B2- 8 956 534
- ANONYMOUS: "Sil-Pad Design Guide", 1 January 2000 (2000-01-01), XP055593979, Retrieved from the Internet <URL:www.farnell.com/datasheets/99609.pdf> [retrieved on 20190604]

## Description

### FIELD OF TECHNOLOGY

The following relates to embodiments of a thermal pad and a column stabilizer thermal gasket assembly, and more specifically to embodiments of a thermal pad with increased abrasion resistance and durability and improved attachability to a column stabilizer assembly.

### BACKGROUND

Liquid chromatography is a technique in analytic chemistry where distinct components of a mixture are identified by separating the individual components by passing the mixture through an adsorbent medium using fluid flow so that the components elute at different rates. Liquid chromatography systems are typically comprised of a solvent delivery pump, an autosampler, a column, and a detector. The solvent delivery pump pumps mobile phase fluid through the system, the autosampler introduces the sample to be analyzed to the analytic flow path, the column contains the adsorbent packing material used to effect separation, and the detector detects the separated components as they elute out of the column.

In certain liquid chromatography applications, such as Ultra Performance Liquid Chromatography (UPLC), it is desirable to preheat and maintain an elevated temperature (e.g. up to 90°C) to the flowing mobile phase before separation occurs inside the column. To raise the temperature of the mobile phase flowing through metal tubing, heat energy is transferred from a column heating module to the metal tubing through direct contact of components. The metal tubing is part of an assembly that is disposed within the column heating module and includes a thermal pad that assists in heat transfer between the heating surface and the metal tubing. Often, the assembly is removed and reinserted into the column heating module, causing separation between a thermal pad and the metal tubing of the assembly and unwanted abrasion, deformation, and tearing of the thermal pad that adversely affects the ability to achieve the necessary heat transfer.

Thus, a need exists for an improved thermal pad and column stabilizer assembly for preheating the mobile phase before entering the column.

A prior art arrangement is known from Anonymous, "Sil-Pad Design Guide", (20000101), URL: www.farnell.com/datasheets/99609.pdf.

### SUMMARY

A first aspect relates generally to a thermal pad for promoting heat transfer between a column heating module and a mobile phase of a liquid chromatography systemby covering a section of tubing carrying the mobile phase to effectuate a uniform heating of the mobile phase, as recited by Claim 1.

The thermal pad may include an opening extending through the silicone layer and the heat resistant polyester resin film layer.

The opening may be configured to allow a fastener to pass therethrough to secure a stabilizer body of a column stabilizer assembly to the column heating module.

The notched portion may accommodate a section of the tubing that passes through the notched portion and extends into an interior region of a column stabilizer assembly.

A section of the thermal pad may be folded over the tubing and make contact with the tacky surface of the silicone layer to secure the thermal pad in the operable configuration.

Portions of the section of the thermal pad that is folded over the tubing may pass between gaps in the section of tubing to make contact with the tacky surface of the silicone layer, while also making direct physical contact with the tubing.

The heat resistant polymer resin layer may increase an abrasion resistance of the thermal pad.

When the thermal pad is heated, the heat resistant polymer resin layer may shrink to tighten down onto the silicone layer.

In the operable configuration, the thermal pad may make direct physical and thermal contact with the tubing to effectuate heat transfer to the mobile phase.

The reinforcement stiffener may be an internal mesh layer within the silicone layer.

A thickness of the silicone layer may be 0.025 inches (0.0635cm), and a thickness of the heat resistant polyester film layer may be 0.005 inches (0.0127cm).

A second aspect relates generally to a column stabilizer assembly, configured to be inserted into a heated region of a column heating module of a liquid chromatography system to effectuate a heating of a mobile phase, the column stabilizer assembly, as recited by Claim 7.

When inserted into the column heating module, the thermal pad may make physical contact with a heating surface of the column heating module in the heated region to uniformly transfer the heat from the heating surface to the serpentine tubing.

A second portion proximate a second end of the thermal pad may be folded over the serpentine tubing such that the second portion wraps around the serpentine tubing and sticks to the tacky surface of the thermal pad.

The thermal pad may include a notched portion to accommodate a section of the serpentine tubing that passes through the notched portion and extends into the interior region of the stabilizer body.

The thermal pad may include an opening that allows a fastener to pass therethrough to secure the stabilizer body of the column stabilizer assembly to the column heating module.

The first portion of the thermal pad folded over the serpentine tubing may be located between the serpentine tubing and the first side section of the stabilizer body.

A third aspect relates generally to a method for pre-heating a mobile phase in a liquid chromatography system prior to the mobile phases entering a column for a separation, as recited by Claim 12.

The foregoing and other features of construction and operation will be more readily understood and fully appreciated from the following detailed disclosure, taken in conjunction with accompanying drawings.

### BRIEF DESCRIPTION OF THE DRAWINGS

Some of the embodiments will be described in detail, with reference to the following figures, wherein like designations denote like members, wherein:
FIG. 1 depicts a perspective view of a column stabilizer assembly, in accordance with embodiments of the present invention;
FIG. 2 depicts an enlarged perspective view of the column stabilizer assembly of FIG. 1, in accordance with embodiments of the present invention;
FIG. 3 depicts an assembly view of the column stabilizer assembly of FIG. 2, in accordance with the present invention;
FIG. 4 depicts a perspective view of a stabilizer body of the column stabilizer assembly, in accordance with embodiments of the present invention;
FIG. 5 depicts a cross-sectional view of the column stabilizer assembly with the stabilizer body removed for clarity, in accordance with embodiments of the present invention;
FIG. 6 depicts a side, cross-sectional view of the column stabilizer assembly with the stabilizer body removed for clarity, in accordance with embodiments of the present invention;
FIG. 7 depicts a front view of a thermal pad, in accordance with embodiments of the present invention;
FIG. 8 depicts a rear view of a thermal pad, in accordance with embodiments of the present invention;
FIG. 9 depicts a side view of the thermal pad, in accordance with embodiments of the present invention;
FIG. 10 depicts a top view of the column stabilizer assembly, in accordance with embodiments of the present invention;
FIG. 11 depicts a side view of the column stabilizer assembly, in accordance with embodiments of the present invention; and
FIG. 12 depicts a front view of the column stabilizer assembly disposed within a column heating module, in accordance with embodiments of the present invention.

### DETAILED DESCRIPTION

Although certain embodiments are shown and described in detail, it should be understood that various changes and modifications may be made without departing from the scope of the appended claims.

As a preface to the detailed description, it should be noted that, as used in this specification and the appended claims, the singular forms "a", "an" and "the" include plural referents, unless the context clearly dictates otherwise.

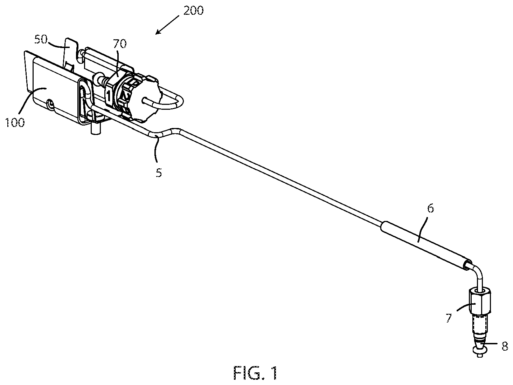

Referring to the drawings, FIG. 1 depicts a perspective view of a column stabilizer assembly 200, in accordance with embodiments of the present invention. Embodiments of the column stabilizer assembly 200 may facilitate a transfer of heat energy from a column heating module to a mobile phase (e.g. solvent) flowing through a tubing of a liquid chromatography system. A column heating module may be disposed within the liquid chromatography system and/or machine, for applying heat to the column stabilizer assembly 200. In an exemplary embodiment, a liquid chromatograph system may include a single column heating module. In other exemplary embodiments, a liquid chromatography system may include more than one column heating module of the same of different types of heating modules (e.g. single extrusion models, triple extrusion models), which may be stacked on top of each other at different heights within the liquid chromatography system/machine. Embodiments of a column heating module may include an extrusion within the column heating module that has a heating element. The heating element of the column heating module may raise a temperature of the extrusion to over 90°C to pre-heat and/or maintain a temperature of the mobile phase before entering the column (e.g. before separation). Moreover, the extrusion, which may be comprised of metal, such as aluminum, may receive a column of a liquid chromatography system and a column stabilizer assembly 200 associated with the column. The column stabilizer assembly 200 may be pressed into the extrusion of the column heating module with an interference fit between the column stabilizer assembly 200 and the column heating module for direct thermal contact therebetween. Embodiments of the column stabilizer assembly 200 may share similar structural components and function(s) as the passive column pre-heater assembly disclosed in U.S. Patent No. 8,956,534.

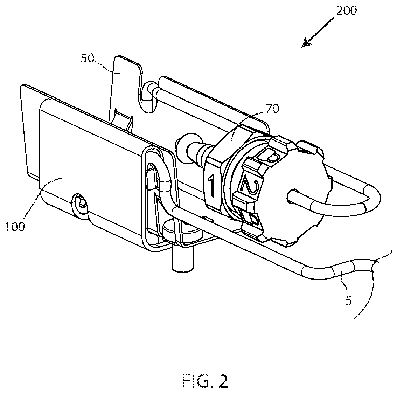

Furthermore, embodiments of the column stabilizer assembly 200 may include a stabilizer body 50, tubing 5, a connection 70, and a thermal pad 100. Embodiments of the tubing 5 may be a stainless steel fluidic connection, a tubing, a flow path, a pipe, a channel, and the like, which may transport an analytic flow path of the liquid chromatography system to the column for separation of the mobile phase components. The tubing 5 may be include a section of tubing having a generally linear and straight configuration coming from a sample manager or autosampler of a liquid chromatography system, prior to the stabilizer body 50. This section of tubing 5 may include a shrink tube 9 surrounding the tubing across a length of the tubing 5. The tubing 5 may also include a coupler 7 and a ferrule 8 for facilitating a fluidic connection to additional tubing. FIG. 2 depicts an enlarged perspective view of the column stabilizer assembly 200 of FIG. 1, in accordance with embodiments of the present invention. A section of the tubing 5 has been removed from FIG. 2 for clarity, indicated by a dashed line across tubing 5.

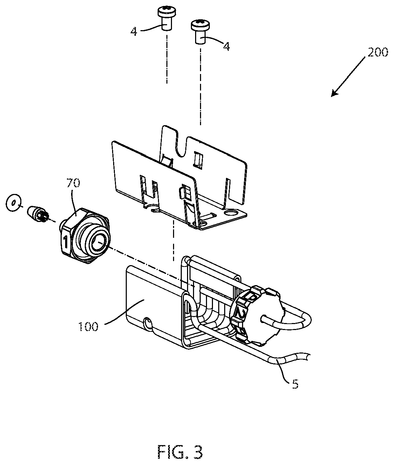

FIG. 3 depicts an assembly view of the column stabilizer assembly 200 of FIG. 2, in accordance with the present invention. In an exemplary embodiment, the column stabilizer assembly 200 may be configured to be inserted into a heated region of a column heating module of a liquid chromatography system to effectuate a heating of a mobile phase. Embodiments of the column stabilizer assembly 200 may include a stabilizer body 50, the stabilizer body having a first side section 51, a bottom section 53, and a side section 52, wherein an interior region 55 is defined between the first side section 51 and the second side section 52, the interior region 55 configured to receive a fitting for connecting an end of the serpentine tubing to a column of the liquid chromatography system, and a thermal pad 100 disposed against the serpentine tubing, wherein a first portion proximate a first end of the thermal pad 100 is folded over the serpentine tubing such that the first portion wraps around the serpentine tubing and sticks to a tacky surface of the thermal pad 100, wherein the column stabilizer assembly 200 is configured to be inserted into the column heating module during operation of the liquid chromatography system.

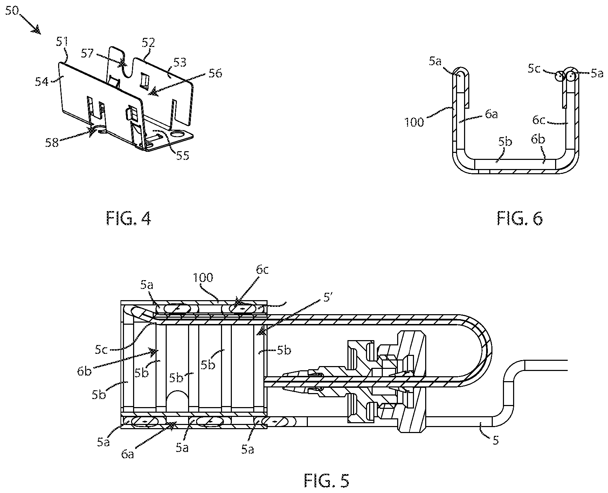

FIG. 4 depicts a perspective view of a stabilizer body 50 of the column stabilizer assembly 200, in accordance with embodiments of the present invention. Embodiments of the column stabilizer assembly 200 may include a stabilizer body 50. The stabilizer body 50 may include a first side section 51, a second side section 52, a bottom section 55, an inner surface 53, and an outer surface 54. An interior region 56 may be defined between the first side section 51 and the second side section 53 and above the bottom section 53 of the stabilizer body 50. Embodiments of the interior region 56 may be a void, an opening, a space, a volume, and the like, which may receive, accommodate, accept, house, partially surround, etc. a section of tubing for connecting to the column. Moreover, embodiments of the stabilizer body 50 may include one or more holes 58 in the bottom surface 55. The hole 58 may be an opening, hole, through hole, void, access, and the like, which may accommodate a fastener 4 (shown in FIG. 3) to pass through and secure the stabilizer body 50 to the extrusion of the column heating module in a heated region of the column heating module. In an exemplary embodiment, hole 58 may be positioned proximate a center location of the stabilizer body 50 lengthwise. The fastener 4 may pass through the hole 58 to tighten the stabilizer body 50 to the column heating module.

Moreover, embodiments of the stabilizer body 50 may include a cutout portion 57. Embodiments of the cutout portion 57 may be a cutout, an opening, a gap, etc., in the second side section 52 of the stabilizer body 50. The cutout 57 may permit a section of the tubing 5 to access and enter the interior region 56 of the stabilizer body from behind the second side section 52. For instance, after a serpentine configuration of the tubing 5, a section of the tubing may enter the interior region 56 of the stabilizer body 50 through cutout 57 from outside the stabilizer body 50 and extend along or proximate the inner surface 53 of the stabilizer body 50 for connecting to the column via connection fitting 70. Embodiments of the connection 70 may be one or more fitting and/or connection components for fluidically connecting the tubing 50 (e.g. an end thereof) to the column. In an exemplary embodiment, the connection 70 may include a locking coupling member, a ferrule, and an O-ring seal member. Further, embodiments of the stabilizer body 50 may be comprised of a thermally conductive material, such as a metal material (e.g. aluminum sheet metal).

FIG. 5 depicts a cross-sectional view of the column stabilizer assembly 200 with the stabilizer body 50 removed for clarity, in accordance with embodiments of the present invention. Embodiments of the tubing 5 may include a serpentine configuration 5'. For instance, a portion of the tubing 5 may have a serpentine configuration 5' for increasing a surface area of the tubing 5 to be heated within a predetermined width or length. The serpentine configuration 5' of the tubing 5 may include a first section 6a, a second section 6b, and a third section 6c. The first section 6a may be parallel or substantially parallel to the third section 6c, wherein the second section 6b may be perpendicular or substantially perpendicular to the first section 6a and the third section 6c. The second section 6b may also have a width that separates the first section 6a from the third section 6c a distance that corresponds to a width of the of the stabilizer body 50. For example, a region between the first section 6a and the third section 6c may receive the stabilizer body 50. Moreover, embodiments of the serpentine configuration 5' of the tubing 5 may include top curved portions 5a and connecting portions 5b that may connect top curved portions 5a located in the first section 5a to top curved portions 5a located in the third section 6c. Accordingly, mobile phase may flow into the serpentine configuration 5'and up through a first connecting portion 5b of the first section 6a and around a first top curved portion 5a in the first section 6a and back through a second connecting portion 5b towards a first top curved portion 5a located in the third section 6c, and around the first top curved portion 5a located in the third section 6a and back through a third connecting portion 5b towards a second top curved portion 5a located in the first section 6a; this process may continue until the last top curved portion located in the third section 6c. Here, a section of tubing 5c may enter the interior region 56 of the stabilizer body 50 via cutout 57 and extend along or proximate the inner surface 53 of the stabilizer body 50 for connection to the column. Further, there may be gaps between the connecting portions 5b, which may allow the thermal pad 100 to stick to itself when wrapped around the top curved portions 5a, as described in greater detail *infra.*

Referring back to FIG. 2, and with additional reference to FIG. 6, embodiments of the column stabilizer assembly 200 include a thermal pad 100. FIG. 6 depicts a side, cross-sectional view of the column stabilizer assembly 200 with the stabilizer body 50 removed for clarity, in accordance with embodiments of the present invention. Embodiments of a thermal pad 100 may be applied to the serpentine configuration 5' of the tubing 5 to promote effective and uniform/even heat transfer to the mobile phase within the tubing 5. For instance, embodiments of the thermal pad 100 may be applied, attached, adhered, stuck to, pressed against, etc., at least one side of the first section 6a, the second section 6b, and the third section 6c to transfer heat to the tubing 5. To prevent or otherwise hinder removal of the thermal pad 100 from the tubing 5 while handling the assembly 200 during installation and re-installation, portions of the thermal pad 100 may be wrapped around the top curved portion of the tubing 5, as shown in FIG. 6. For instance, portions of the thermal pad 100 may wrap around and/or over one or more top curved portions 5a on the first section 6a of the serpentine configuration 5' of the tubing 5 so that the thermal pad 100 touches the tubing 5 on at least two sides. The folded over portion of the thermal pad 100 may reside between the tubing 5 and an outer surface 54 of the stabilizer body 50.

Furthermore, the folded over portion may make contact with the thermal pad 100 in addition to the contact with the tubing 5. For example, the thermal pad 100 may be pressed into engagement with the serpentine configuration 5' so that thermal pad 100 contacts the tubing 5 but is also forced through the gaps between the tubing 5 to make contact with the thermal pad 100, which displaces air between the tubing 5 and replaces the air with the conductive material of the thermal pad 100. As explained in further detail *infra,* embodiments of the thermal pad 100 may include a tacky surface that when pressed against the tubing 5 and against itself, the thermal pad 100 may stick to the tubing 5 and to the thermal pad 100 covering the opposing side of the tubing 5.

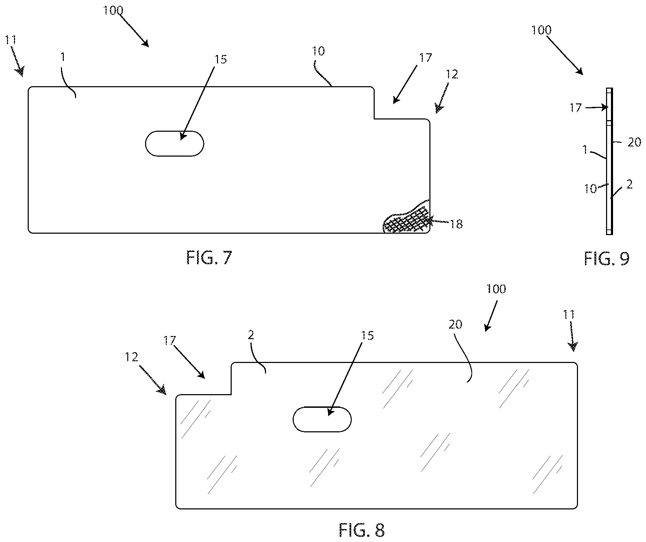

Referring now to FIGs. 7-9, embodiments of the thermal pad 100 will now be described. Embodiments of the thermal pad 100 may be for promoting heat transfer between a column heating module and a mobile phase of a liquid chromatography The thermal pad includes a silicone layer 10, the silicone layer 10 having a reinforcement stiffener for reduced stretching of the silicone layer, and a tacky surface on at least a first side 1 of the silicone layer 10, and a heat resistant polyester resin film layer 20 coupled to a second side 2 of the silicone layer 10. In an operable configuration, the thermal pad 100 may cover a section of tubing 5 carrying the mobile phase to effectuate a uniform heating of the mobile phase.

FIG. 7 depicts a front view of a thermal pad 100, in accordance with embodiments of the present invention. The thermal pad 100 includes a silicone layer 10. The silicone layer 10 includes a first side 1 and an opposing second side 2, shown in FIG. 8. Embodiments of the thermal pad 100 may be a generally rectangular shaped piece of thermally conductive elastic material, configured to wrap around and cover a serpentine tubing 5' carrying a mobile phase in the liquid chromatography system. In alternative embodiments, the thermal pad 100 may have a non-rectangular shape, which may also be sufficient for covering the tubing 5, such as an elliptical shape, square shape, etc. Embodiments of the thermal pad 100 may have various designs and shapes, which may accomplish the functions described herein. The silicone layer 10 comprises a tacky surface, thermally conductive silicone material. For instance, the silicone layer 10 of the thermal pad 100 may be designed to enhance thermal conductivity by conducting heat energy through direct contact with other components, and include a tacky or otherwise sticky surface. The tacky surface may be tacky enough so that when the silicone layer 10 is pressed against the tubing 5, the silicon layer 10 may stick to the tubing 5 without requiring an additional mechanical force to maintain the attachment of the thermal pad 100 to the tubing 5, but may not be permanently adhered together. Further, the tacky surface may be tacky enough so that when the silicone layer 10 is pressed against other parts of the thermal pad 100 (e.g. folded portions over top curved portions 5a), the silicon layer 10 may stick to the other parts of the thermal pad 100 without requiring an additional mechanical force to retain such attachment, but may not be permanently adhered. The tacky surface is present on the first side 1 of the silicone layer 10 and/or the second side 2 of the silicone layer 10. The tacky surface may be a product of how the silicone material of the layer 10 is created, or a tacky substance may be applied to the exterior of the silicone layer 10. Due to the tacky surface of the silicone layer 10 of the thermal pad 100, and/or the wrapping technique used to wrap a portion of the thermal pad 100 around and over the tubing 5 on both sides of the tubing, a user may be prevented or otherwise hindered from accidentally lifting off or removing the thermal pad 100 during handling of the column stabilizer assembly 200, and/or when removing the column stabilizer assembly 200 from the column heating module. In an exemplary embodiment, a thickness of the silicone layer 10 may be between 0.015 inches and 0.4 inches (0.0381 centimeters - 1.016 centimeters). In another exemplary embodiment, a thickness of the silicone layer 10 may be 0.025 inches (0.635 centimeters). In yet another embodiment, a thickness of the thermal pad 100 may be 1/2mm + 0.005" (0.0127cm).

Furthermore, the silicone layer 10 of the thermal pad 100 includes a reinforcement stiffener 18. The reinforcement stiffener 18 may reduce a stretching of the thermal pad 100. Embodiments of the reinforcement stiffener may be an internal mesh layer within the silicone layer 10. In an exemplary embodiment, the internal mesh layer may be a nylon mesh. The reinforcement stiffener 18 may also resist undue deformation of the thermal pad 100, and may help prevent tearing of the thermal pad 100.

FIG. 8 depicts a rear view of a thermal pad, in accordance with embodiments of the present invention. The thermal pad 100 includes a heat resistant polyester resin film layer coupled to the second side 2 of the silicone layer 10. Embodiments of the polyester resin film layer 20 may be a clear layer offering abrasion resistance to the thermal pad 100. Embodiments of the polyester resin film layer may be a layer of Mylar ^{®} attached to the second side 2 of the silicone layer 10. The layer 20 may increase an abrasion resistance of the thermal pad 100, as well as an overall durability of the thermal pad 100 as the assembly 200 is removed and replaced within the column heating module. The layer 20 may prevent or otherwise a tearing of the thermal pad 100.

A thickness of the polyester resin film layer 20 may be between 0.002 inches and 0.005 inches (0.002 centimeters - 0.0127 centimeters). If the polyester resin film layer 20 is too thin, the layer 20 may tear. If the polyester resin film layer is too thick, then the thermal resistance of the layer 20 may be too great and can hinder the wrapping ability of the thermal pad 100. Further, when the thermal pad 100 is heated, the heat resistant polymer resin layer 20 may undergo a shrinking effect, so that the layer 20 shrinks to tighten down onto the silicone layer 10. In an exemplary embodiment, the assembly 200 may be pre-heated before shipping to an end user and placed within the column heating module to elicit the heat shrink effect of the layer 20 onto the layer 10.

FIG. 9 depicts a side view of the thermal pad 100, in accordance with embodiments of the present invention. Embodiments of the thermal pad 100 may thus include a silicone layer 10 and a clear polyester resin film layer 20, wherein the silicone layer 10 may have a greater thickness than the polyester resin film layer 20.

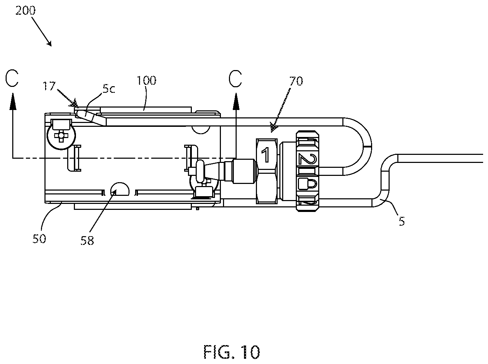

Referring again to FIGs. 7-9, embodiments of the thermal pad 100 may include a first end 11 and a second end 12. The thermal pad 100 includes a notched portion 17 proximate, at, or otherwise near the second end 12. The notched portion 17 may be proximate a corner of the thermal pad 100 nearby the second end 12. Embodiments of the notched portion 17 may be defined by a gap, opening, void, etc. at a corner of the thermal pad 100. The notched portion 17 may provide access, clearance, or a pathway for the length of tubing 5c that enters the interior region 56 of the stabilizer body The notched portion 17 is defined by a recessed surface, recessed from a top edge of the thermal pad. The recessed surface may be recessed approximately between 0.3 and 0.4 inches (0.762 centimeters - 1.016), e.g. 0.340 inches (0.864cm). In other embodiments, the notched portion 17 may have rounded edges, square edges, or a combination of round and square edges. Instead of a completely open ended notched portion 17, the notched portion 17 may have an opening within the thermal pad 100 proximate the corner area, wherein the opening is surrounded by portion of the thermal pad 100. FIG. 10 depicts a top view of the column stabilizer assembly 200, in accordance with embodiments of the present invention. Embodiments of the tubing 5c may pass through the notched portion 17 of the thermal pad 100 and then through the cutout 57 of the stabilizer body 50 to connect with connection 70 of the stabilizing assembly 200. For example, the location of the notched portion 17 of the thermal pad 100 may correspond with a location of the cutout 57 of the stabilizer body 50, in an operable configuration. Having the notched portion 17 may also allow a thermal pad 100 to be retrofitted onto existing column stabilizer assemblies that have a similar tubing configuration.

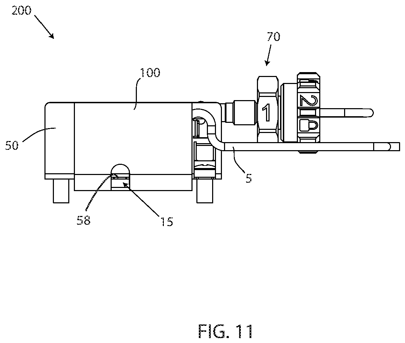

Furthermore, embodiments of the thermal pad 100 may also include an opening 15. Embodiments of the opening 15 may be an opening, a hole, an aperture, a clearance hole, an access point, and the like. Embodiments of the opening 15 may extend through the silicone layer 10 and the heat resistant polyester resin film layer 20, and may correspond to a location of hole 58 of the stabilizer body 50, as shown in FIG. 11. For example, the opening 15 is configured to allow a fastener 4 or other attachment component to pass therethrough to secure a stabilizer body 500 of a column stabilizer assembly 200 to the column heating module. The opening 15 further provides clearance for a portion of the stabilizer body 50 surrounding the hole 58 that protrudes from the first side section 51 of the stabilizer body 50.

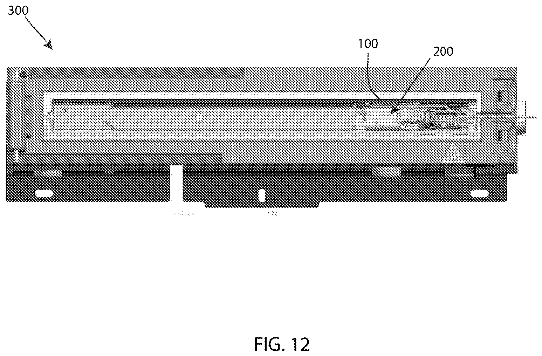

FIG. 12 depicts a front view of the column stabilizer assembly 200 disposed within a column heating module 300, in accordance with embodiments of the present invention. Embodiments of the column stabilizer assembly may be pressed into the extrusion within the column heating module that has a heating element. The heating element of the column heating module may raise a temperature of the extrusion up to 90°C to pre-heat and/or maintain a temperature of the mobile phase before entering the column (e.g. before separation). Other heating elements incorporated into the column heating module may go over 90°C. The column stabilizer assembly 200 may be pressed into the extrusion of the column heating module with an interference fit between the column stabilizer assembly 200 and the column heating module for direct thermal contact therebetween. In some embodiments, the column stabilizer assembly 200, in particular the stabilizer body 50, may be further secured to the extrusion of the column heating module by one or more (e.g. two) fasteners, such as screws 4. The thermal pad 100 may mechanically interfere with the heating surface of the heated region of the column heating module 300 of a liquid chromatography system. The physical, direct contact of the thermal pad 100 and the heating surface of the column heating module 300 may in turn raise or otherwise control a temperature of a solvent flowing in the tubing 5 of the liquid chromatography system.

Referring now to FIGs. 1-12, a method for assembling a column stabilizer for use in a column heating module 300 of a liquid chromatography system may include the step of applying a thermal pad 100 to tubing 5 containing a mobile phase. The tubing 5 may have a serpentine configuration 5' that defines a first section 6a, a second section 6b, and a third section 6c each covered by the thermal pad 100. The method for assembling the column stabilizer may also include wrapping a first portion of the thermal pad 100 proximate a first end 11 of the thermal pad 100 around a curved top portion 5a of the first section 6a of the tubing 5', so that the first portion contacts the tacky surface of the silicone layer 10. Likewise, the method for assembling the column stabilizer may also include wrapping a second portion of the thermal pad 100 proximate a second end 12 of the thermal pad 100 around a curved top portion 5a of the third section 6c of the tubing 5', so that the second portion contacts the tacky surface of the silicone layer 10. The tubing 5' covered by the thermal pad may be disposed around a stabilizer body 50 for attachment to or engagement with the column heating module 300, wherein heat generated by the column heating module 300 is transferred to the mobile phase within the section of tubing 5' via physical contact between the thermal pad 100 and the section of tubing 5'.

Further, a method for pre-heating a mobile phase in a liquid chromatography system prior to the mobile phase entering a column for a separation includes the step of disposing a column stabilizer assembly 200 in a column heating module 300, the column stabilizer assembly 200 including a stabilizer body 50, the stabilizer body 50 having a first side section 51, a bottom section 55, and a second side section 52, wherein an interior region is defined between the first side section 51 and the second side section 52, a connection fitting 70 for connecting an end of the serpentine tubing 5' to a column of the liquid chromatography system, and a thermal pad 100 disposed against the serpentine tubing 5', wherein a first portion proximate a first end 11 of the thermal pad 100 is folded over the serpentine tubing 5' such that the first portion wraps around the serpentine tubing 5' and sticks to a tacky surface of the thermal pad 100,wherein the column heating module 300 applies heat from a heating surface to the column stabilizer assembly 200.

While this disclosure has been described in conjunction with the specific embodiments outlined above, it is evident that many alternatives, modifications and variations will be apparent to those skilled in the art. Accordingly, the preferred embodiments of the present disclosure as set forth above are intended to be illustrative, not limiting. Various changes may be made without departing from the scope of the claims.

## Claims

1. A thermal pad (100) for promoting heat transfer between a column heating module and a mobile phase of a liquid chromatography system by covering a section of tubing carrying the mobile phase to effectuate a uniform heating of the mobile phase, the thermal pad comprising:
a silicone layer (10), the silicone layer having a reinforcement stiffener (18) for reducing stretching of the silicone layer, and a tacky surface on at least a first side of the silicone layer;
a heat resistant polyester resin film layer (20) coupled to a second side of the silicone layer; and
a notched portion (17) in only one corner of the thermal pad, the notched portion defined by a first edge extending vertically from a top edge of the thermal pad and a second edge extending horizontally from a side edge of the thermal pad towards the first edge, wherein the first edge is perpendicular to the second edge.

2. The thermal pad of claim 1, further comprising: a single opening extending through the silicone layer and the heat resistant polyester resin film layer.

3. The thermal pad of claim 2, wherein the opening is an elliptical opening.

4. The thermal pad of claim 1, wherein a section of the thermal pad is configured to be folded over to make contact with the tacky surface of the silicone layer to secure the thermal pad in an operable configuration.

5. The thermal pad of claim 1, wherein the reinforcement stiffener is an internal nylon mesh layer within the silicone layer.

6. The thermal pad of claim 1, wherein a thickness of the silicone layer is 0.025 inches (0.0635cm), and a thickness of the heat resistant polyester film layer is 0.005 inches (0.0127cm).

7. A column stabilizer assembly (200), configured to be inserted into a heated region of a column heating module (300) of a liquid chromatography system to effectuate a heating of a mobile phase, the column stabilizer assembly comprising:
a stabilizer body (50), the stabilizer body having a first side section (51), a bottom section (55), and a side section (52), wherein an interior region (55) is defined between the first side section and the second side section; a serpentine tubing;
a connection fitting (70) for connecting an end of the serpentine tubing to a column of the liquid chromatography system; and
a thermal pad (100), as claimed in claim 1, disposed against the serpentine tubing, wherein a first portion proximate a first end of the thermal pad is folded over the serpentine tubing such that the first portion wraps around the serpentine tubing and sticks to the tacky surface of the thermal pad;
wherein the column stabilizer assembly is configured to be inserted into the column heating module during operation of the liquid chromatography system.

8. The column stabilizer assembly of claim 7, wherein a second portion proximate a second end of the thermal pad is folded over the serpentine tubing such that the second portion wraps around the serpentine tubing and sticks to the tacky surface of the thermal pad.

9. The column stabilizer assembly of claim 7, wherein the notched portion is configured to accommodate a section of the serpentine tubing that passes through the notched portion and extends into the interior region of the stabilizer body.

10. The column stabilizer assembly of claim 7, wherein the thermal pad includes an elliptical opening.

11. The column stabilizer assembly of claim 7, wherein the first portion of the thermal pad folded over the serpentine tubing is located between the serpentine tubing and the first side section of the stabilizer body

12. A method for pre-heating a mobile phase in a liquid chromatography system prior to the mobile phase entering a column for a separation, the method comprising:
disposing a column stabilizer assembly (200) in a column heating module (300), the column stabilizer assembly including a stabilizer body (50), the stabilizer body having a first side section (51), a bottom section (55), and a second side section (52), wherein an interior region is defined between the first side section and the second side section, a connection fitting (70) for connecting an end of the serpentine tubing to a column of the liquid chromatography system, and a thermal pad (100) disposed against the serpentine tubing, wherein a first portion proximate a first end of the thermal pad is folded over the serpentine tubing such that the first portion wraps around the serpentine tubing and sticks to a tacky surface of the thermal pad;
wherein the column heating module applies heat from a heating surface to the column stabilizer assembly
wherein the thermal pad includes a silicone layer (10), the silicone layer having a reinforcement stiffener (18), a tacky surface on at least a first side of the silicone layer, a heat resistant polyester resin film layer (20) coupled to a second side of the silicone layer, and a notched portion (17) in only one corner of the thermal pad, the notched portion defined by a first edge extending vertically from a top edge of thermal pad and a second edge extending horizontally from a side edge of the thermal pad towards the first edge, wherein the first edge is perpendicular to the second edge.

13. A liquid chromatography system comprising a column heating module and a tube for carrying a mobile phase, the system comprising a thermal pad as claimed in Claim 1 covering a section of the tubing carrying the mobile phase.

14. The liquid chromatography system of claim 13 further comprising a column stabilizer assembly, wherein the notched portion accommodates a section of the tubing that passes through the notched portion and extends into an interior region of the column stabilizer assembly.

15. The liquid chromatography system of Claim 13 or 14, wherein a section of the thermal pad is folded over to make contact with the tacky surface of the silicone layer to secure the thermal pad in an operable configuration, wherein portions of the section of the thermal pad that is folded over the tubing pass between gaps in the section of tubing to make contact with the tacky surface of the silicone layer, while also making direct physical contact with the tubing.

## Patentansprüche

1. Wärmepad (100) zur Förderung der Wärmeübertragung zwischen einem Säulenheizmodul und einer mobilen Phase eines Flüssigkeitschromatographiesystems durch Abdecken eines Abschnitts eines die mobile Phase führenden Schlauchs, um eine gleichmäßige Erwärmung der mobilen Phase zu bewirken, wobei das Wärmepad umfasst:
eine Silikonschicht (10), wobei die Silikonschicht eine Verstärkungsversteifung (18) zum Reduzieren der Dehnung der Silikonschicht und eine klebrige Oberfläche auf mindestens einer ersten Seite der Silikonschicht aufweist;
eine hitzebeständige Polyesterharzfolienschicht (20), die mit einer zweiten Seite der Silikonschicht verbunden ist; und
einen gekerbten Abschnitt (17) in nur einer Ecke des Wärmepads, wobei der gekerbte Abschnitt durch eine erste Kante definiert ist, die vertikal von einer oberen Kante des Wärmepads verläuft, und eine zweite Kante, die horizontal von einer Seitenkante des Wärmepads in Richtung der ersten Kante verläuft, wobei die erste Kante senkrecht zur zweiten Kante verläuft.

2. Wärmepad nach Anspruch 1, ferner umfassend: eine einzelne Öffnung, die durch die Silikonschicht und die hitzebeständige Polyesterharzfolienschicht verläuft.

3. Wärmepad nach Anspruch 2, wobei die Öffnung eine elliptische Öffnung ist.

4. Wärmepad nach Anspruch 1, wobei ein Abschnitt des Wärmepads so konfiguriert ist, dass er umgefaltet ist, um Kontakt mit der klebrigen Oberfläche der Silikonschicht herzustellen und so das Wärmepad in einer betriebsbereiten Konfiguration zu sichern.

5. Wärmepad nach Anspruch 1, wobei es sich bei der Verstärkungsversteifung um eine innere Nylonnetzschicht innerhalb der Silikonschicht handelt.

6. Wärmepad nach Anspruch 1, wobei eine Dicke der Silikonschicht 0,025 Zoll (0,0635 cm) und eine Dicke der hitzebeständigen Polyesterfolienschicht 0,005 Zoll (0,0127 cm) beträgt.

7. Säulenstabilisatoranordnung (200), die dazu konfiguriert ist, in einen beheizten Bereich eines Säulenheizmoduls (300) eines Flüssigkeitschromatographiesystems eingesetzt zu werden, um eine Erwärmung einer mobilen Phase zu bewirken, wobei die Säulenstabilisatoranordnung umfasst:
einen Stabilisatorkörper (50), wobei der Stabilisatorkörper einen ersten Seitenabschnitt (51), einen Bodenabschnitt (55) und einen Seitenabschnitt (52) aufweist, wobei zwischen dem ersten Seitenabschnitt und dem zweiten Seitenabschnitt ein Innenbereich (55) definiert ist;
einen Serpentinenschlauch;
ein Anschlussstück (70) zum Verbinden eines Endes des Serpentinenschlauchs mit einer Säule des Flüssigkeitschromatographiesystems; und
ein Wärmepad (100) nach Anspruch 1, das an dem Serpentinenschlauch angeordnet ist, wobei ein erster Abschnitt in der Nähe eines ersten Endes des Wärmepads über den Serpentinenschlauch gefaltet ist, so dass der erste Abschnitt den Serpentinenschlauch umhüllt und an der klebrigen Oberfläche des Wärmepads haftet;
wobei die Säulenstabilisatoranordnung so konfiguriert ist, dass sie während des Betriebs des Flüssigkeitschromatographiesystems in das Säulenheizmodul eingesetzt wird.

8. Säulenstabilisatoranordnung nach Anspruch 7, wobei ein zweiter Abschnitt in der Nähe eines zweiten Endes des Wärmepads über den Serpentinenschlauch gefaltet ist, so dass der zweite Abschnitt sich um den Serpentinenschlauch wickelt und an der klebrigen Oberfläche des Wärmepads haftet.

9. Säulenstabilisatoranordnung nach Anspruch 7, wobei der gekerbte Abschnitt so konfiguriert ist, dass er einen Abschnitt des Serpentinenschlauchs aufnehmen kann, die durch den gekerbten Abschnitt verläuft und in den Innenbereich des Stabilisatorkörpers hineinragt.

10. Säulenstabilisatoranordnung nach Anspruch 7, wobei das Wärmepad eine elliptische Öffnung einschließt.

11. Säulenstabilisatoranordnung nach Anspruch 7, wobei sich der erste Abschnitt des Wärmepads, der über den Serpentinenschlauch gefaltet ist, zwischen dem Serpentinenschlauch und dem ersten Seitenabschnitt des Stabilisatorkörpers befindet.

12. Verfahren zum Vorwärmen einer mobilen Phase in einem Flüssigkeitschromatographiesystem, bevor die mobile Phase in eine Säule für eine Trennung eintritt, wobei das Verfahren umfasst:
Anordnen einer Säulenstabilisatoranordnung (200) in einem Säulenheizmodul (300), wobei die Säulenstabilisatoranordnung einen Stabilisatorkörper (50) einschließt, wobei der Stabilisatorkörper einen ersten Seitenabschnitt (51), einen Bodenabschnitt (55) und einen zweiten Seitenabschnitt (52) aufweist, wobei ein Innenbereich zwischen dem ersten Seitenabschnitt und dem zweiten Seitenabschnitt definiert ist, eine Anschlussarmatur (70) zum Verbinden eines Endes des Serpentinenschlauchs mit einer Säule des Flüssigkeitschromatographiesystems und ein Wärmepad (100), das an dem Serpentinenschlauch angeordnet ist, wobei ein erster Abschnitt in der Nähe eines ersten Endes des Wärmepads über den Serpentinenschlauch gefaltet ist, so dass der erste Abschnitt den Serpentinenschlauch umhüllt und an einer klebrigen Oberfläche des Wärmepads haftet;
wobei das Säulenheizmodul Wärme von einer Heizfläche auf die Säulenstabilisierungsanordnung überträgt,
wobei das Wärmepad eine Silikonschicht (10) einschließt, die eine Verstärkungsversteifung (18) aufweist, eine klebrige Oberfläche auf mindestens einer ersten Seite der Silikonschicht, eine hitzebeständige Polyesterharzfolienschicht (20), die mit einer zweiten Seite der Silikonschicht verbunden ist, und einen gekerbten Abschnitt (17) in nur einer Ecke des Wärmepads, wobei der gekerbte Abschnitt durch eine erste Kante definiert ist, die vertikal von einer oberen Kante des Wärmepads verläuft, und eine zweite Kante, die horizontal von einer Seitenkante des Wärmepads in Richtung der ersten Kante verläuft, wobei die erste Kante senkrecht zur zweiten Kante verläuft.

13. Flüssigkeitschromatographiesystem, umfassend ein Säulenheizmodul und einen Schlauch zum Transportieren einer mobilen Phase, wobei das System ein Wärmepad nach Anspruch 1 umfasst, das einen Abschnitt des Schlauchs abdeckt, der die mobile Phase transportiert.

14. Flüssigkeitschromatographiesystem nach Anspruch 13, ferner umfassend eine Säulenstabilisatoranordnung, wobei der gekerbte Abschnitt einen Abschnitt des Schlauchs aufnimmt, der durch den gekerbten Abschnitt verläuft und in einen Innenbereich der Säulenstabilisatoranordnung hineinragt.

15. Flüssigkeitschromatographiesystem nach Anspruch 13 oder 14, wobei ein Abschnitt des Wärmepads umgefaltet ist, um Kontakt mit der klebrigen Oberfläche der Silikonschicht herzustellen und so das Wärmepad in einer betriebsbereiten Konfiguration zu sichern, wobei Teile des Abschnitts des Wärmepads, der über den Schlauch gefaltet ist, zwischen Lücken im Schlauchabschnitt hindurchgehen, um Kontakt mit der klebrigen Oberfläche der Silikonschicht herzustellen und dabei auch direkten physischen Kontakt mit dem Schlauch herzustellen.

## Revendications

1. Tampon thermique (100) permettant de promouvoir un transfert de chaleur entre un module de chauffage à colonne et une phase mobile d'un système de chromatographie liquide en couvrant une section de tubulure portant la phase mobile pour effectuer un chauffage uniforme de la phase mobile, le tampon thermique comprenant :
une couche de silicone (10), la couche de silicone ayant un raidisseur de renforcement (18) permettant de réduire l'étirement de la couche de silicone, et une surface collante sur au moins un premier côté de la couche de silicone ;
une couche de film de résine de polyester résistant à la chaleur (20) accouplée à un second côté de la couche de silicone ; et
une partie entaillée (17) dans un seul coin du tampon thermique, la partie entaillée étant définie par un premier bord s'étendant verticalement à partir d'un bord supérieur du tampon thermique et un second bord s'étendant horizontalement à partir d'un bord latéral du tampon thermique vers le premier bord, dans lequel le premier bord est perpendiculaire au second bord.

2. Tampon thermique selon la revendication 1, comprenant en outre : une ouverture unique s'étendant à travers la couche de silicone et la couche de film de résine de polyester résistant à la chaleur.

3. Tampon thermique selon la revendication 2, dans lequel l'ouverture est une ouverture elliptique.

4. Tampon thermique selon la revendication 1, dans lequel une section du tampon thermique est conçue pour être
repliée pour entrer en contact avec la surface collante de la couche de silicone pour fixer le tampon thermique dans une configuration opérationnelle.

5. Tampon thermique selon la revendication 1, dans lequel le raidisseur de renforcement est une couche de maille interne en nylon au sein de la couche de silicone.

6. Tampon thermique selon la revendication 1, dans lequel une épaisseur de la couche de silicone est de 0,025 pouce (0,0635 cm), et une épaisseur de la couche de film de polyester résistant à la chaleur est de 0,005 pouce (0,0127 cm).

7. Ensemble stabilisateur de colonne (200), conçu pour être inséré dans une région chauffée d'un module de chauffage à colonne (300) d'un système de chromatographie liquide pour effectuer un chauffage d'une phase mobile, l'ensemble stabilisateur de colonne comprenant :
un corps de stabilisateur (50), le corps de stabilisateur ayant une première section latérale (51), une section inférieure (55), et une section latérale (52), dans lequel une région intérieure (55) est définie entre la première section latérale et la seconde section latérale ;
une tubulure en serpentin ;
un accessoire de raccordement (70) permettant de raccorder une extrémité de la tubulure en serpentin à une colonne du système de chromatographie liquide ; et
un tampon thermique (100), selon la revendication 1, disposé contre la tubulure en serpentin, dans lequel une première partie proche d'une première extrémité du tampon thermique est repliée sur la tubulure en serpentin de telle sorte que la première partie s'enroule autour de la tubulure en serpentin et adhère à la surface collante du tampon thermique ;
dans lequel l'ensemble stabilisateur de colonne est conçu pour être inséré dans le module de chauffage à colonne pendant l'opération du système de chromatographie liquide.

8. Ensemble stabilisateur de colonne selon la revendication 7, dans lequel une seconde partie proche d'une seconde extrémité du tampon thermique est repliée sur la tubulure en serpentin de telle sorte que la seconde partie s'enroule autour de la tubulure en serpentin et adhère à la surface collante du tampon thermique.

9. Ensemble stabilisateur de colonne selon la revendication 7, dans lequel la partie entaillée est conçue pour accueillir une section de la tubulure en serpentin qui passe à travers la partie entaillée et s'étend dans la région intérieure du corps de stabilisateur.

10. Ensemble stabilisateur de colonne selon la revendication 7, dans lequel le tampon thermique comporte une ouverture elliptique.

11. Ensemble stabilisateur de colonne selon la revendication 7, dans lequel la première partie du tampon thermique repliée sur la tubulure en serpentin est située entre la tubulure en serpentin et la première section latérale du corps de stabilisateur

12. Procédé de préchauffage d'une phase mobile dans un système de chromatographie liquide avant que la phase mobile n'entre dans une colonne pour une séparation, le procédé comprenant :
la disposition d'un ensemble stabilisateur de colonne (200) dans un module de chauffage à colonne (300), l'ensemble stabilisateur de colonne comportant un corps de stabilisateur (50), le corps de stabilisateur ayant une première section latérale (51), une section inférieure (55), et une seconde section latérale (52), dans lequel une région intérieure est définie entre la première section latérale et la seconde section latérale, un accessoire de raccordement (70) permettant de raccorder une extrémité de la tubulure en serpentin à une colonne du système de chromatographie liquide, et un tampon thermique (100) disposé contre la tubulure en serpentin, dans lequel une première partie proche d'une première extrémité du tampon thermique est repliée sur la tubulure en serpentin de telle sorte que la première partie s'enroule autour de la tubulure en serpentin et adhère à une surface collante du tampon thermique ;
dans lequel le module de chauffage à colonne applique de la chaleur à partir d'une surface chauffante à l'ensemble stabilisateur de colonne
dans lequel le tampon thermique comporte une couche de silicone (10), la couche de silicone ayant un raidisseur de renforcement (18), une surface collante sur au moins un premier côté de la couche de silicone, une couche de film de résine de polyester résistant à la chaleur (20) accouplée à un second côté de la couche de silicone, et une partie entaillée (17) dans un seul coin du tampon thermique, la partie entaillée étant définie par un premier bord s'étendant verticalement à partir d'un bord supérieur de tampon thermique et un second bord s'étendant horizontalement à partir d'un bord latéral du tampon thermique vers le premier bord, dans lequel le premier bord est perpendiculaire au second bord.

13. Système de chromatographie liquide comprenant un module de chauffage à colonne et un tube permettant de porter une phase mobile, le système comprenant un tampon thermique selon la revendication 1 recouvrant une section de la tubulure portant la phase mobile.

14. Système de chromatographie liquide selon la revendication 13 comprenant en outre un ensemble stabilisateur de colonne, dans lequel la partie entaillée accueille une section de la tubulure qui passe à travers la partie entaillée et s'étend dans une région intérieure de l'ensemble stabilisateur de colonne.

15. Système de chromatographie liquide selon la revendication 13 ou 14, dans lequel une section du tampon thermique est repliée pour entrer en contact avec la surface collante de la couche de silicone pour fixer le tampon thermique dans une configuration opérationnelle, dans lequel des parties de la section du tampon thermique qui est repliée sur la tubulure passent entre des espaces dans la section de tubulure pour entrer en contact avec la surface collante de la couche de silicone, tout en établissant un contact physique direct avec la tubulure.
